# EUROPEAN PATENT SPECIFICATION

(11) **EP 2 613 224 B1**
(45) Date of publication and mention of the grant of the patent: **29.08.2018**
(21) Application number: 12008133.6
(22) Date of filing: 05.12.2012
(51) Int. Cl.: G06F 3/01, H04M 1/23, G06F 3/0485

(54) **Mobile terminal and control method therof**
Mobiles Endgerät und Steuerungsverfahren dafür
Terminal mobile et son procédé de contrôle

(30) Priority: 06.01.2012 KR 20120002109
(43) Date of publication of application: 10.07.2013
(73) Proprietor: LG Electronics, Inc., Seoul, 150-721 (KR)
(72) Inventor: Kunwoo, Lee, 153-801 Seoul (KR); Eunju, Lee, 153-801 Seoul (KR); Junghoon, Park, 153-801 Seoul (KR); Woong, Choi, 153-801 Seoul (KR)
(74) Representative: Thum, Bernhard

(56) References cited:
- EP-A2- 2 224 321
- WO-A2-2010/127714
- US-A1- 2010 026 656
- US-A1- 2010 251 152
- US-A1- 2011 254 865
- US-B1- 6 351 273
- ZHAI S ET AL: "Manual and gaze input cascaded (MAGIC) pointing", ACM CHI 1999; [CHI CONFERENCE PROCEEDINGS. HUMAN FACTORS IN COMPUTING SYSTEMS], ACM, 2 PENN PLAZA, SUITE 701 NEW YORK NY 10121-0701 USA, 15 May 1999 (1999-05-15), pages 246-253, XP002605663, ISBN: 978-0-201-48559-2

## Description

### Background of the Invention

### Field of the invention

The present invention relates to a mobile terminal and more particularly, a mobile terminal and a control method of the terminal, capable of improving operability for the mobile terminal by controlling the mobile terminal based on a touch input through a touchpad and a gaze direction of a user.

### Discussion of the related art

As functions of terminals such as personal computers, laptop computers, cellular phones diversify, the terminals become multimedia players having multiple functions for capturing pictures or moving images, playing music, moving image files and games and receiving broadcasting programs.
Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.
To support and enhance the increasing number of functions in a terminal, improving a structural part and/or a software part of the terminal would be desirable.

Recently, various methods providing an interface for operating a mobile terminal conveniently are under development.

WO 2010/127714 A2 relates to an electronic apparatus including a coordinate input surface on which an object can be placed and a position of the object can be estimated, and further including a position obtaining unit, such as an image capturing unit, the images of which are used for estimating the position at which the user is looking on the coordinate input surface. The electronic apparatus is configured to be controlled at least based on the combination of the position of the object and the position where the user is looking at.

US 6,351,273 B1 relates to a method of controlling automatic scrolling on a display including finding a screen gaze position on the display of the user and determining whether the gaze position is within at least one activated control region defined by a number of concentric circles. Scrolling is activated according to the gaze position by scrolling a display of information at which the gaze of the user is positioned to the center of the display at a rate that is defined for the concentric circle at which the gaze of the user is positioned.

### Summary of the invention

It is an object of the present invention to provide a mobile terminal and a control method for the mobile terminal improving operability for the mobile terminal and to improve handling of displayed items for the user of the mobile terminal.

This object is solved by the present invention as defined in the independent claims. Exemplary embodiments are defined in the dependent claims.

### Brief description of the drawings

The accompanying drawings, which are included to provide a further understanding of the invention and are incorporated in and constitute a part of this application, illustrate embodiment(s) of the invention and together with the description serve to explain the principle of the invention.
- FIG. 1: is a block diagram of a mobile terminal according to an embodiment;
- FIG. 2: is a front perspective view of a mobile terminal of FIG. 1;
- FIGS. 3 and 4: illustrate operation of a touchpad of a mobile terminal of FIG. 2;
- FIGS. 5 and 6: are flowcharts illustrating operation of a mobile terminal of FIG. 1;
- FIGS. 7 and 8: illustrate a method of obtaining a gaze direction of the user of a mobile terminal of FIG. 1;
- FIG. 9: illustrates a first embodiment of a mobile terminal of FIG. 1;
- FIGS. 10 to 16: illustrate a second embodiment of a mobile terminal of FIG. 1;
- FIGS. 17 to 23: illustrate a third embodiment of a mobile terminal of FIG. 1;
- FIGS. 24 and 25: illustrate a fourth embodiment of a mobile terminal of FIG. 1;
- FIGS. 26 to 28: illustrate a fifth embodiment of a mobile terminal of FIG. 1;
- FIGS. 29 and 30: illustrate a sixth embodiment of a mobile terminal of FIG. 1;
- FIG. 31: illustrates a seventh embodiment of a mobile terminal of FIG. 1; and
- FIG. 32: illustrates an eighth embodiment of a mobile terminal of FIG. 1.

### Detailed description of the invention

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

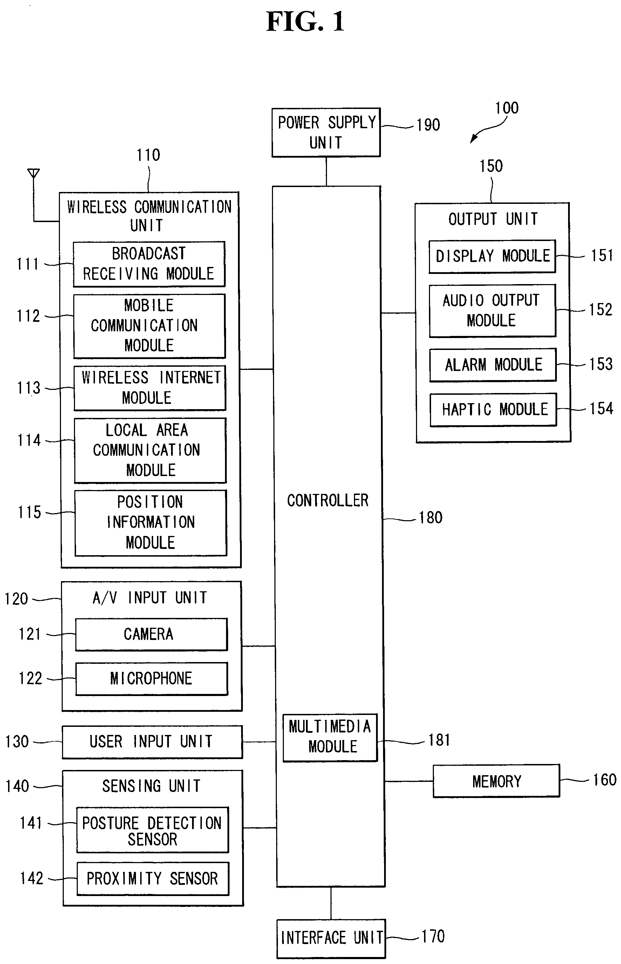

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.
The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasizenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

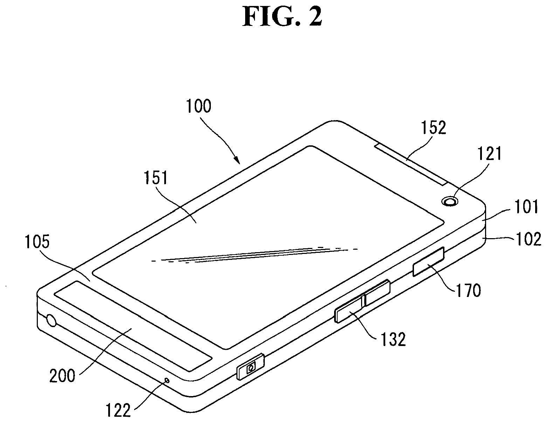

FIG. 2 is a front perspective view of a mobile terminal of FIG. 1.

As shown in the figure, a mobile terminal 100 according to one embodiment of the present invention has a bar-shaped terminal body. However, the present invention is not limited to the above assumption but can be applied to terminals of various types including slide type, folder type, swing type, and/or swivel type terminals, where two or more bodies are combined to provide a relative motion between the bodies.

The body includes a case (a casing, a housing, a cover, and so on) forming the external appearance. In the present embodiment, the case may be divided into a front case 101 and a rear case 102. Various electronic components may be arranged in the space formed between the front case 101 and the rear case 102. At least one intermediate case may be additionally provided between the front case 101 and the rear case 102.

Cases may be made from synthetic resin by injection molding or made from metallic material such as stainless steel (STS) or titanium (Ti).

In the terminal body, for most cases, in a front case 101, a display 151, a sound output unit 152, a camera 121, a user input unit 132, a microphone 122, and an interface unit 170 can be disposed.

The display 151 occupies the most of the primary surface area of the front case 101. Of two end parts of the display 151, in an area adjacent to one end part of the two, the sound output unit 152 and the camera 121 are disposed while in the other end part, disposed are the user input unit 132 and a microphone 122. The user input unit 132 and the interface unit 170 are disposed on the side surfaces of the front 101 and the rear case 102.

The user input unit 132 is intended for receiving commands to control the operation of the mobile terminal 100 and may include a plurality of user input units 132.

The user input unit 132 may also be called a manipulating portion; any kind of method can be employed for the user input unit 132 as long as the user is enabled to operate the mobile terminal 100 while applying and receiving a tactile input and feedback.

The touchpad 200 can be disposed in the front surface adjacent to the display 151. The touchpad 200 can be disposed in a bezel area 105 which does not overlap with the display 151. For example, the touchpad 200 can be disposed at an appropriate position among a lower end part, a side surface part, and a upper end part.

Since the touchpad 200 is disposed in a separate area from the display 151, images displayed on the display 151 may not be occluded at the time of operation through the touchpad 200.

More than one touchpad 200 can be employed for the touchpad. For example, the touchpad 200 may be disposed on the front and the rear surface, respectively.

The touchpad 200 may be used as a means for acquiring a touch input of the user. However, a touch input of the user obtained through the touchpad 200 may be used differently from the touch input obtained through the display 151. For example, the touch input obtained through the display 151 can be used for selecting a particular menu or an object directly; however, a touch input obtained through the touchpad 200 may be used being combined with a gaze direction of the user. Utilizing a touch input obtained though the touchpad 200 will be described in detail at the corresponding part of this document.

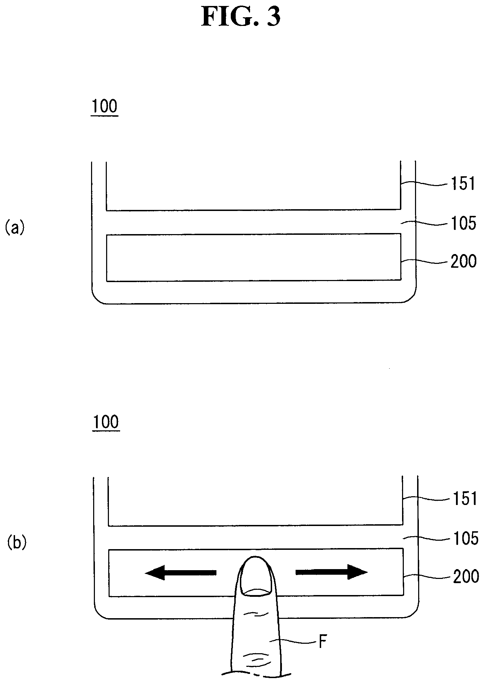

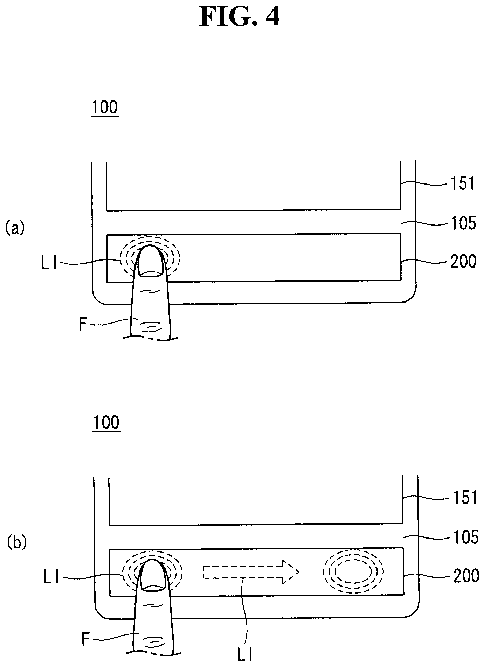

FIGS. 3 and 4 illustrate operation of a touchpad of a mobile terminal of FIG. 2.

As shown in the figure, the touchpad 200 of a mobile terminal 100 according to one embodiment of the present invention may correspond to a means for obtaining a touch input of the user.

As described in FIG. 3(a), the touchpad 200 may be disposed in one side of a bezel 105. In what follows, it is assumed that the touchpad 200 is disposed in a lower part of the display 151. However, it should be noted that the position of the touchpad 200 of the present invention is not limited to the above assumption.

As shown in FIG. 3(b), the user can touch the touchpad 200 by using his or her finger F. The touchpad 200, in response to the user's touch, can generate a touch input signal. The touch input signal includes information about at least one of the position at which the touch is made, touch area, duration of the touch input, a motion generated from the touch. For example, if the finger F makes a dragging motion along a left and right direction, the touchpad 200 can generate a signal including at least one information among the current position of the finger F, a motion generated by the finger F, and a movement speed based on time information of the finger F.

As shown in FIG. 4(a), the touchpad 200 may include a lighting unit LI.

The lighting unit LI may be formed as a single module together with the touchpad 200 or buried in a lower part of the touchpad 200. The lighting unit LI can emit light selectively according to a control signal of the controller 180. The user can perceive the light generated at the lighting unit LI through the touchpad 200.

The lighting unit LI helps the user clearly identify the position at which a touch is made by his or her finger F. In other words, the controller 180 is capable of controlling the lighting unit LI to emit light at the corresponding position to which a touch input is applied.

As shown in FIG. 4(b), the lighting unit LI may also be used for indicating a position where a user input is required. For example, it implies that taking into account the current touch input of the user, the lighting unit LI may generate light to indicate the position and/or direction where additional touch input is required.

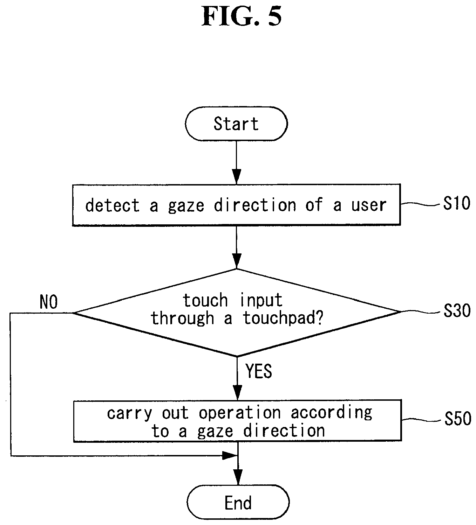

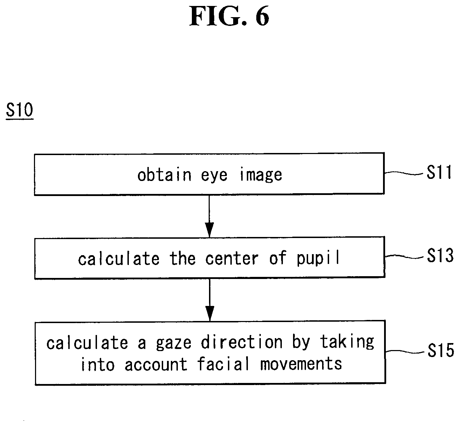

FIGS. 5 and 6 are flowcharts illustrating operation of a mobile terminal of FIG. 1.

As shown in FIG. 5, the controller 180 of a mobile terminal 100 according to one embodiment of the present invention carries out the step of detecting a gaze direction of the user S10.

The gaze direction indicates a direction along and/or a position which the user of the mobile terminal 100 is viewing the mobile terminal. For example, the gaze direction indicates that which position of the display 151 the user is looking at, how long the user is viewing the position, and which position the user is viewing next to the position may be included. A method of detecting a gaze direction will be described in detail at the corresponding part of this document.

Now, a step of determining whether there exists a touch input through the touchpad S30 and a step of carrying out operation according to a gaze direction S50 may be carried out.

A touch input can be obtained through the touchpad 200. A mobile terminal 100 according to one embodiment of the present invention can carry out operation based on a gaze direction of the user. However, operation of the mobile terminal 100 can be controlled by combining a touch input obtained through the touchpad 200 and the gaze direction. Therefore, compared with the case where the mobile terminal 100 is controlled based only a touch input or a gaze direction, precise operation intended by the user can be carried out.

As shown in FIG. 6, the step of detecting a gaze direction of the user (S10 of FIG. 5) of the mobile terminal 100 according to one embodiment of the present invention may include a step of obtaining an image of the user's eye S11.

The eye image can be captured through the camera 121 of the mobile terminal 100. For example, the eye image of the user who operates the mobile terminal 100 can be obtained through the camera 121 disposed at one position of the front surface of the mobile terminal 100.

In general, the user operating the mobile terminal 100 gazes at the display 151 disposed in the front surface of the mobile terminal 100. Therefore, the face image of the user can be captured through the camera 121 on the front surface with relative ease. The controller 180 can extract the eye region from the face image captured.

Now, a step of calculating the center of pupil S13 can be carried out.

The pupil is a circular region of an eye, located in the center of the eye surrounded by iris. The pupil is darker compared with other part of the eye; the color of the pupil is usually black for Asians.

The gaze direction of the user may be highly related to the pupil. For example, an area which the user is viewing with an interest may actually correspond to the direction along which the center of the pupil is pointed.

The center of the pupil is located in the center of the eye image captured and can be extracted based on its relatively dark shape and/or color characteristics. For example, the center position of a pupil image of circular shape may be determined as the center of the pupil.

Next, a step of calculating a gaze direction by taking account of facial movement S15 may be carried out.

The facial movement is worth consideration as an element to calculate the gaze direction of the user along with the center position of the pupil. For example, even if the user faces front without any movement of pupil, the user's gaze direction may change as the user moves his or her head in left and right direction.

The facial movement can be detected through the face image of the user captured by the camera 121. The controller 180 can extract the viewing direction of the face based on characteristic elements such as forehead, eyes, nose, mouth, and ears in the face image.

Based on the facial movement and center position of the pupil calculated, the controller 180 can estimate the gaze direction. For example, the controller 180 can determine which part of the display 151 the user is currently viewing. For the convenience of understanding, description of the present invention is provided based on the gaze direction; however, the gaze direction may include a looking direction of the user's face due to the motion of the user's head.

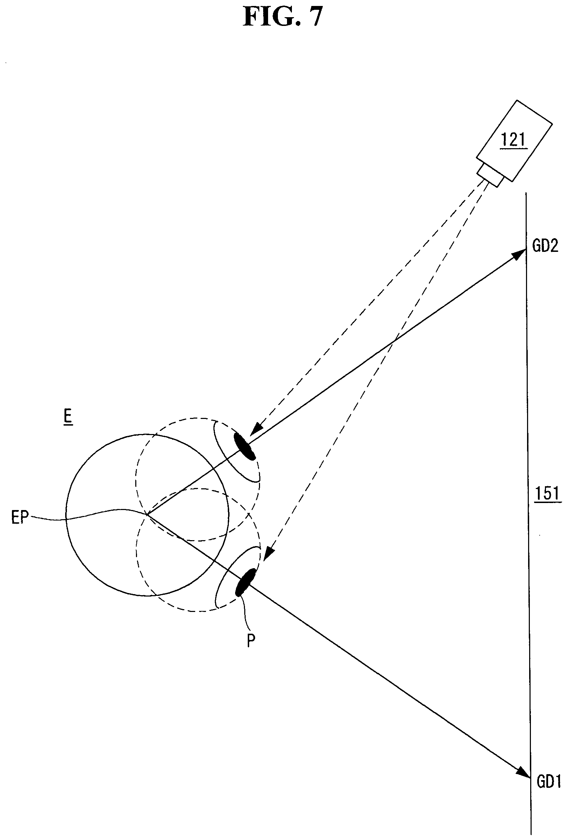

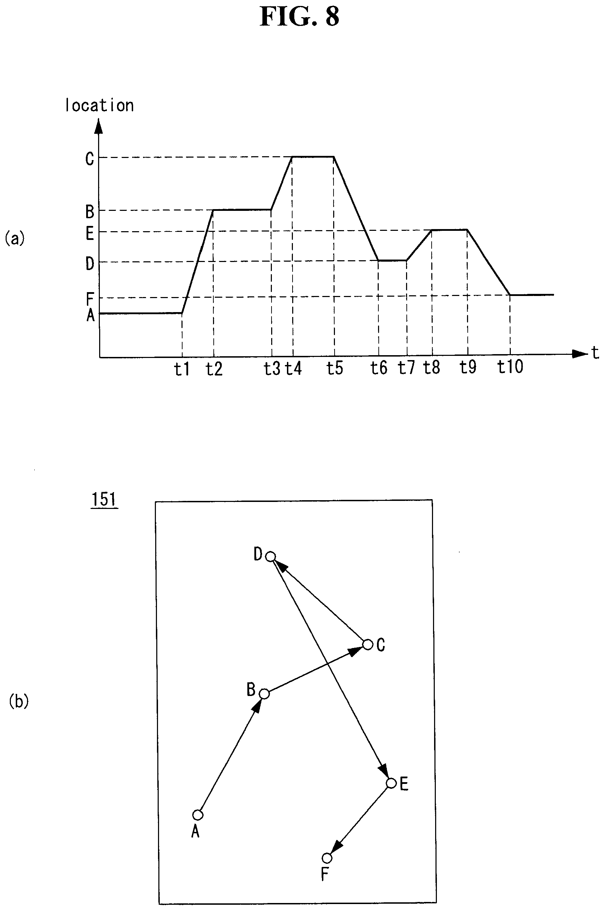

FIGS. 7 and 8 illustrate a method of obtaining a gaze direction of the user of a mobile terminal of FIG. 1.

As shown in FIG. 7, the controller 180 of a mobile terminal 100 according to one embodiment of the present invention can obtain a gaze direction of the user from the image captured through the camera 121.

The start point of a gaze direction may be the center point EP of the eyeball. In other words, the gaze direction can be determined by a gaze vector GD1, GD2 starting from the center EP of the eyeball and passing through the center P of the pupil.

If the user moves his gaze direction, the center P of his or her pupil may also move accordingly. In this case, if there is no facial movement of the user, only the center P of the user's pupil can move while the center EP of the eyeball remains fixed. If the center P of the user's pupil moves, the gaze vector GD1, GD2 can move from a first gaze vector GD1 to a second gaze vector GD2.

If the user makes a facial movement, the center EP of the eyeball and the center P of the user's pupil can move simultaneously. Therefore, the controller 180 can obtain a gaze direction based on the user's facial movement and/or the movement of the center of the user's pupil obtained through the camera 121.

As shown in FIG. 8, the controller 180 of a mobile terminal 100 according to one embodiment of the present invention can determine which part of the display 151 and how long the user is viewing based on the gaze direction obtained.

As shown in FIG. 8(a), the location which the user is viewing may change as time passes. For example, the user may view A point until t1 and move his or her gaze direction to B point between t1 and t2 and gaze B point from t2 until t3 and move again from t3.

As shown in FIG. 8(b), change of location at which the user is gazing can be mapped into particular coordinates on the display 151. In other words, the controller 180 can match the gaze direction of the user obtained to the coordinates on the display 151.

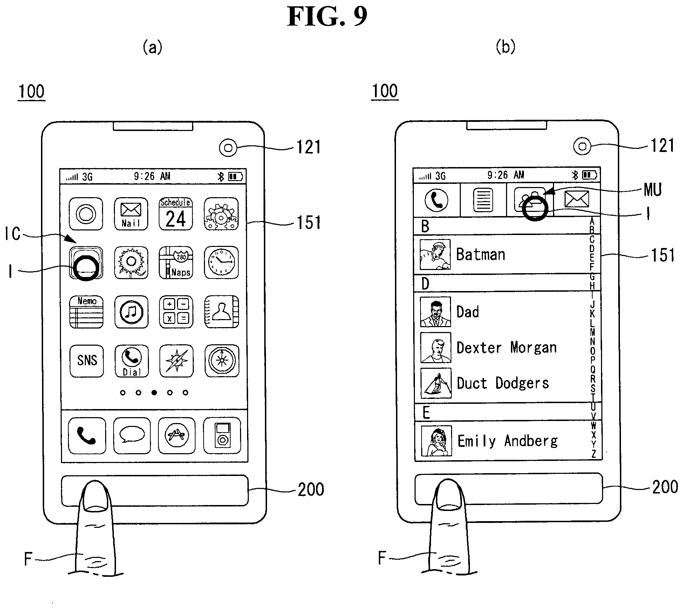

FIG. 9 illustrates a first embodiment of a mobile terminal of FIG. 1.

As shown in the figure, the controller 180 of a mobile terminal 100 according to a first embodiment of the present invention can carry out operation selecting a particular item based on a touch input of the user through the touchpad 200 and a gaze direction through the camera 121.

As shown in FIG. 9(a), the display 151 may display a plurality of icons. For example, icons corresponding to individual applications are arranged in the background screen of the mobile terminal 100.

The user can touch the touchpad 200 by using his or her finger F. If the touchpad 200 is touched, a touch input signal is generated.

If a touch input signal is generated, the controller 180 can obtain a gaze direction of the user. For example, a gaze direction of the user can be obtained from the user image obtained from the camera 121 activated. Similarly, the camera 121 captures the user image continuously irrespective of occurrence of a touch input signal and in case of occurrence of a touch input signal, the controller 180 can obtain the gaze direction of the user from the user image captured.

If a gaze direction of the user is obtained, the controller 180 can determine which position of the display 151 the user is viewing. The controller 180 can mark an indicator I at the position corresponding to a detected gaze direction. If the indicator I is displayed, the user can more clearly recognize the position which he or she is viewing. However, an indicator I should not necessarily be displayed all the time. In what follows, for the convenience of understanding, an indicator I denoting the position the user is viewing will be displayed according to the needs.

If a viewing position according to a gaze direction of the user is detected, the controller 180 can carry out operation of selecting an item corresponding to the viewing position. For example, the controller 180 can carry out operation selecting a particular icon IC corresponding to an indicator I representing the viewing position among the icons IC displayed. In a particular icon IC is selected, an application corresponding to the icon can be carried out.

As shown in FIG. 9(b), selection of an icon according to a gaze direction can be carried out under various conditions of the mobile terminal 100. For example, as shown in the figure, a contact list may be displayed on the display 151. At this time, if the user touches the touchpad 200, the controller 180 obtains the gaze direction of the user at the time of touch and carries out an item corresponding to the gaze direction. For example, a function corresponding to a particular menu MU can be carried out.

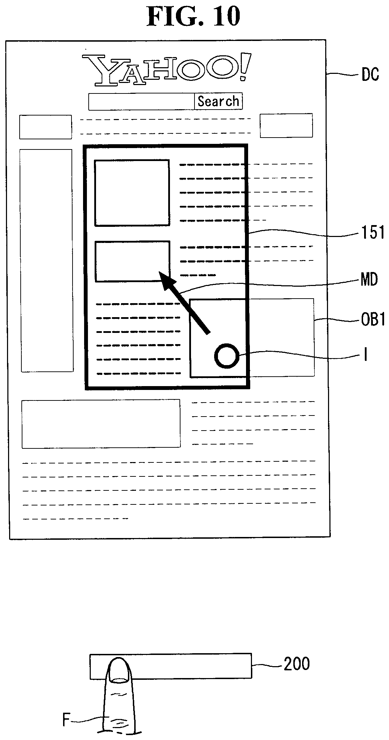

FIGS. 10 to 16 illustrate a second embodiment of a mobile terminal of FIG. 1.

As shown in the figure, the controller 180 of a mobile terminal 100 according to a second embodiment of the present invention can display a particular position of a document DC that the user wants to display based on the user's view.

As shown in the figure, a document DC may be larger than the area supported by the display 151. In other words, the display 151 can display only a part of the document DC according to a control signal and/or a ratio determined by the user's selection. For the convenience of understanding, the whole document DC has been virtually displayed. As can be seen from the figure, only the part included in the display area of the display 151 is displayed and visually recognized.

The document DC may correspond to a web document obtained through the wireless communication unit 110, an e-book stored in the memory 160, an image, and so on.

While the document DC is displayed in the display 151, the user can touch the touchpad 200 by using his or her finger F. If the touchpad 200 is touched, the controller 180 can carry out operation according to a gaze direction of the user.

The gaze direction of the user may point toward a first object OB1 located being deviated relatively to one side of the document area currently displayed on the display 151.

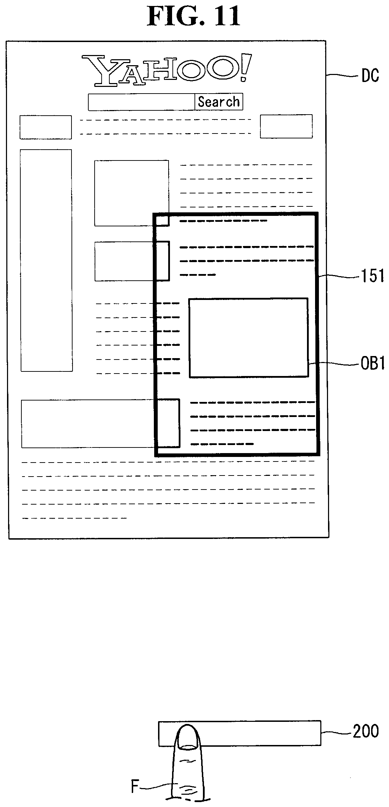

As shown in FIG. 11, the controller 180 can display the first object OB1 which the user is viewing in the center of the display 151. In other words, the first object OB1 located away from the center to one side of the display 151 is moved to the center of the display 151 and displayed. Suppose the operation described above is called centering. Generally speaking, the position that the user is watching corresponds to the position at which an item of interest is located. The controller 180 of a mobile terminal 100 according to one embodiment of the present invention, by displaying an item of user's interest at the center of the display 151, can effectively display the information required by the user without separate operation.

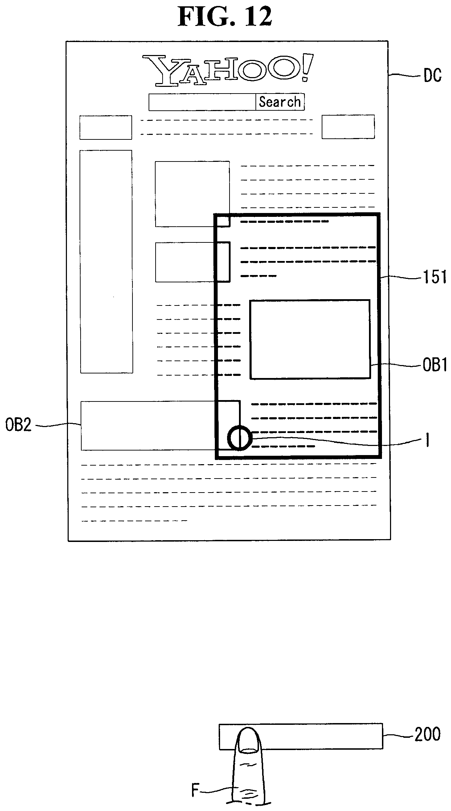

As shown in FIG. 12, the user can view a point located away from the center of the display 151 while touching the touchpad 200. For example, as shown in the figure, the user may gaze at a lower left-side point of the display 151.

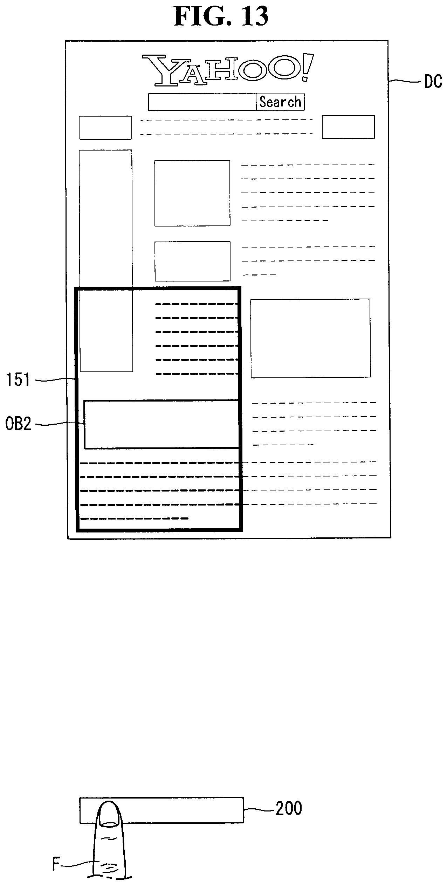

As shown in FIG. 13, the controller 180 may scroll the document DC to correspond to a direction of the point which the user is viewing. In other words, the document DC is scrolled continuously and a second object OB2 located in a lower, left-side of the document is displayed on the display 151.

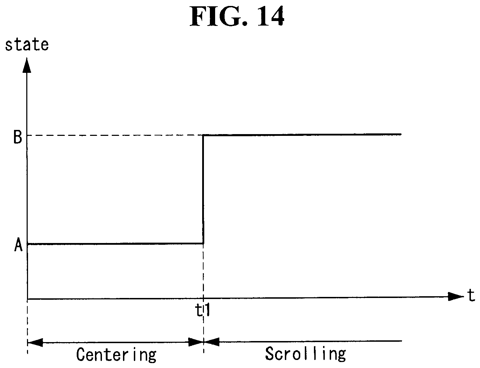

As shown in FIG. 14, depending on a time duration for which the user touches the touchpad 200, operation can be divided into a centering and a scrolling operation. For example, the centering operation can be carried out from the time when the touchpad 200 is touched until t1, while the scrolling operation can be carried out beyond the time point of t1. Therefore, at the beginning, a particular item of a displayed document DC is displayed in the center at a time; after a predetermined time period, then the document DC is scrolled continuously and the area of the user's interest can be displayed.

Since the centering and scrolling operation is differentiated according to time duration for which the touchpad 200 is touched, the user can have the area of his or her interest displayed properly by stopping a touch motion against the touchpad 200 or by maintaining the touch.

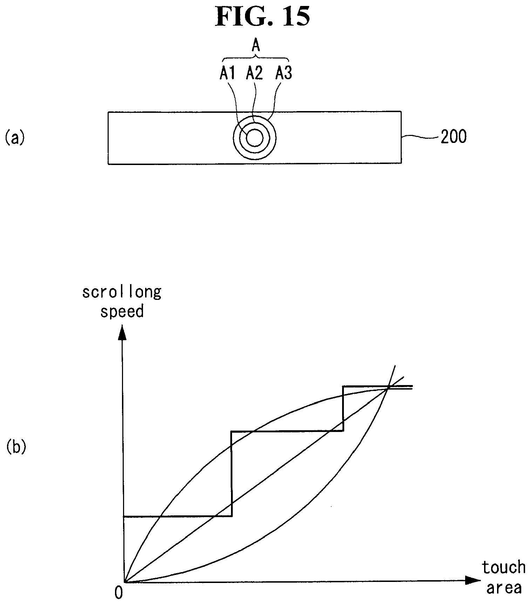

As shown in FIG. 15, the controller 180 of a mobile terminal 100 according to one embodiment of the present invention can determine the scrolling speed based on the intensity of a touch motion against the touchpad 200 and/or a touch area.

As shown in FIG. 15(a), depending on the pressure applied to the touchpad 200, the touch area between the user's finger F and the touchpad 200 can be divided into a first to a third area (A1 to A3). For example, in case the user makes a soft touch motion, pressure is applied to the part corresponding to the first area A1, whereas it is applied to the part corresponding to the third area A3 in case of a strong touch motion.

As shown in FIG. 15(b), the controller 180 can control the scrolling speed to be varied according to the size of a touch area A. For example, the scrolling speed can be made to increase linearly in proportion to the increase of the touch area A; similarly, the scrolling speed can be made to increase abruptly or slowly depending on a time point at which the touch area A is increased. Furthermore, the scrolling speed can be made to increase discontinuously even if the touch area A is increased continuously.

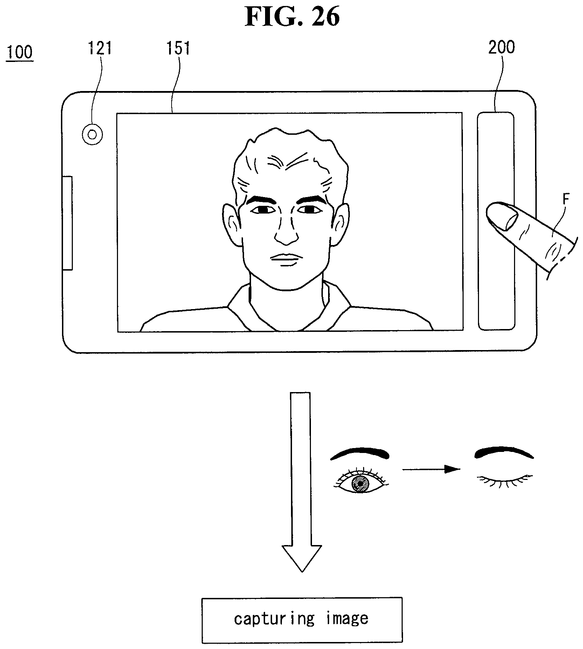

As shown in FIG. 26, the controller 180 of a mobile terminal 100 according to one embodiment of the present invention can change a method of displaying an item based on at least one of the time point at which the user's touch motion is applied to the touchpad 200, whether the touch motion generates a dragging motion, and degree of the dragging motion.

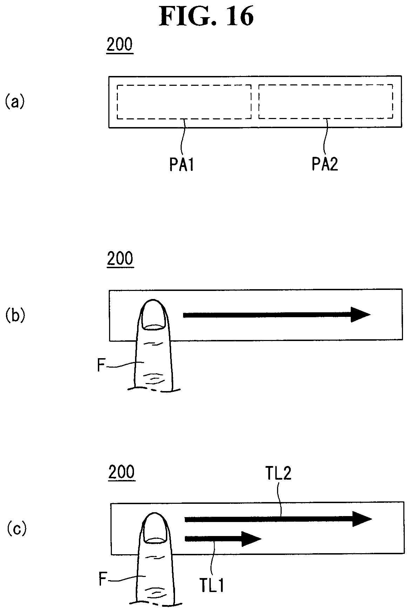

As shown in FIG. 16(a), the touchpad 200 can be divided into a first area PA1 and a second area PA2. The first and the second area PA1, PA2 are not physically separated from each other but they can be identified as logically separated areas. The lighting unit (LI of FIG. 4) can express the first and the second area PA1, PA2 visually.

The controller 180 can carry out operation differently according to whether the first area PA1 or the second area PA2 is being touched. For example, the centering operation can be carried out while the first area PA1 is touched, whereas the scrolling operation can be carried out while the second area PA2 is touched.

As shown in FIG. 16(b), the user can carry out a dragging motion by using his or her finger F. In other words, the user can carry out operation moving along a predetermined direction while the touchpad 200 is being touched.

If a dragging motion is carried out on the touchpad 200, the controller 180 can change the scrolling speed according to the dragging motion. For example, if the user touches the left side of the touchpad, the scrolling speed can be made to increase compared with a case where the right side of the touchpad 200 is being touched.

As shown in FIG. 16(c), the user can drag different distances on the touchpad 200. For example, the user can carry out a relatively short, first drag TL1 or a relatively long, second drag TL2.

The controller 180 can carry out operation different from each other depending on the drag distances. For example, in case of the first drag TL1, which is relatively short, scrolling is carried out slowly, whereas, in case of the second drag TL2, which is relatively long, scrolling is carried out quickly.

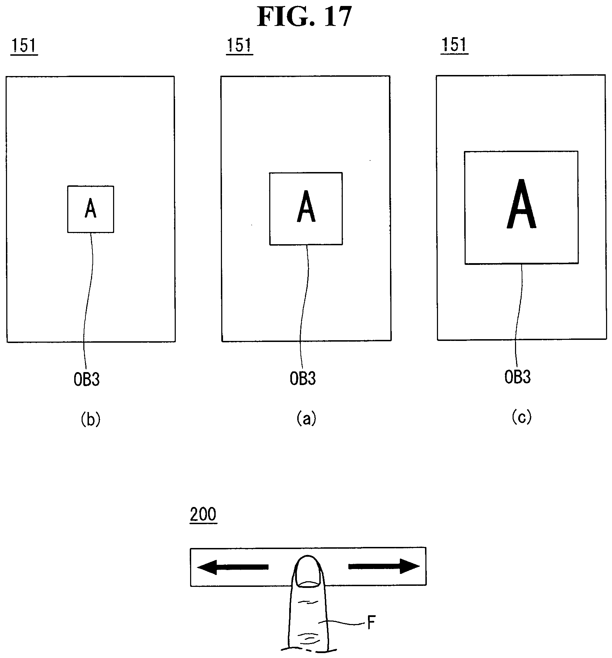

FIGS. 17 to 23 illustrate a third embodiment of a mobile terminal of FIG. 1.

As shown in the figure, the controller 180 of a mobile terminal 100 according to a third embodiment of the present invention can carry out touch operation against the touchpad 200 and/or expansion, reduction, or movement of an item displayed along a gaze direction.

As shown in FIG. 17, the display 151 may initially display a third object OB3 of size shown in FIG. 17(a).

The user can carry out a drag motion in a left and right direction on the touchpad 200 by using his or her finger F. If the user drags his or her finger F to the left of the touchpad 200, the controller 180 reduces and displays the third object OB3. In other words, display size of the third object OB3 is changed to that shown in FIG. 17(b). If the user drags to the right of the touchpad 200, the controller 180 magnifies and displays the third object OB3. In other word, display size of the third object OB3 is changed to that shown in FIG. 17(c).

Since if a dragging motion is carried out on the touchpad 200, an item displayed corresponding to the motion is expanded or reduced, operation of the displayed item can be carried out easily.

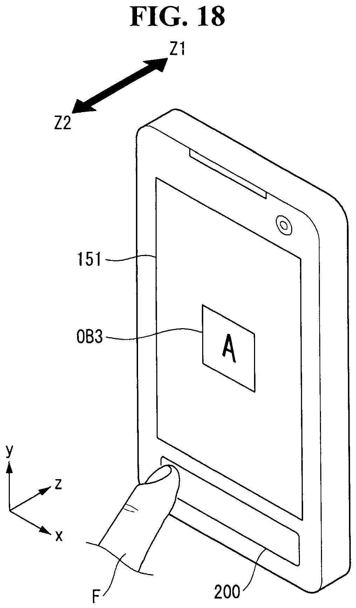

As shown in FIG. 18, the controller 180 of a mobile terminal 100 according to one embodiment of the present invention can detect a movement of the mobile terminal 100 while the touchpad 200 is being touched and carry out operation corresponding to the movement.

The user can touch the touchpad 200 by using his or her finger F. The user, while touching the touchpad 200, can move the mobile terminal 100 along Z-axis direction.

For example, the user can move the mobile terminal 100 along a Z1 direction moving away from the user or along a Z2 direction moving toward to the user. The movement of the mobile terminal 100 can be detected through a posture detection sensor 141.

If the mobile terminal 100 moves along Z-axis while the touchpad 200 is being touched, the controller 180 can change the size of the third object OB3 displayed. For example, if the mobile terminal 100 moves along Z1 direction, the size of the third object OB3 can be made to be reduced, whereas the size of the third object OB3 can be made to be increased if the mobile terminal 100 moves along Z2 direction.

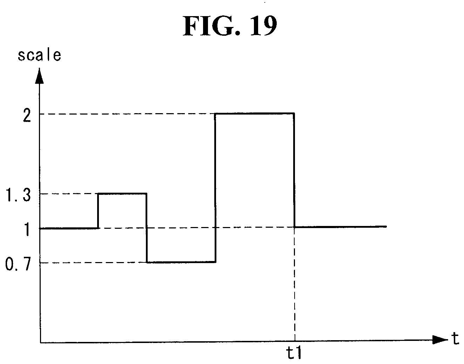

As shown in FIG. 19, the controller 180 of a mobile terminal 100 according to one embodiment of the present invention can change size of an item displayed based on the user's operation. For example, an item may be initially displayed with a scale of 1; according to the user's input, the scale of the item is changed to 1.3, 0.2, or 2 and thus displayed.

The item displayed after its scale has been changed can be recovered to its initial scale at a time based on a particular touch motion of the user against the touchpad 200. For example, if the user carries out a double touch motion at the time of t1, the controller 180 changes the scale of the item to its initial scale and displays the item. Since the size of an item displayed can be recovered to its original size due to a simple touch motion of the user against the touchpad 200, operational convenience of the mobile terminal 100 can be improved.

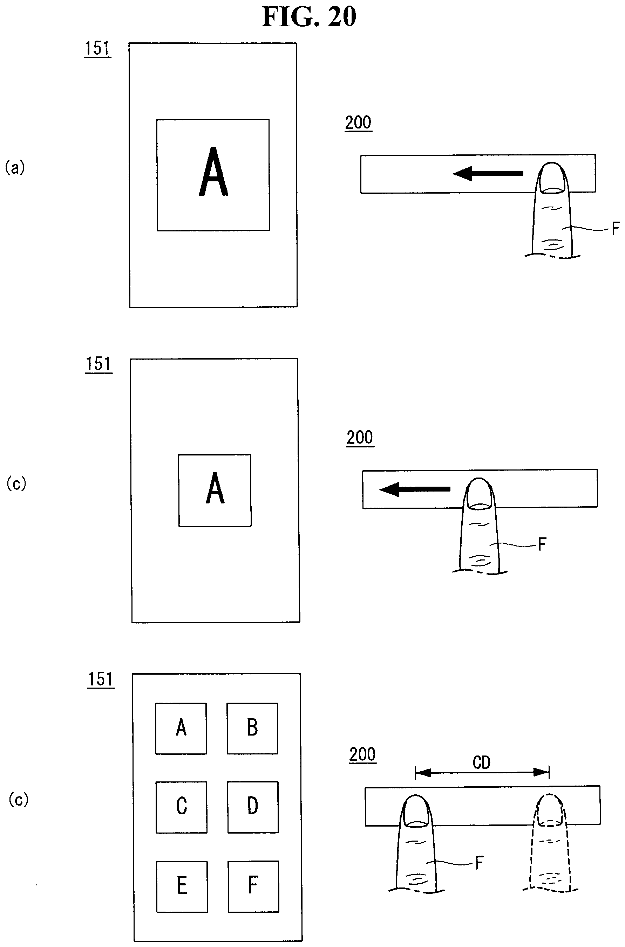

As shown in FIG. 20, the controller 180 of a mobile terminal 100 according to one embodiment of the present invention can carry out different operation according to size change of a displayed item.

As shown in FIGS. 20(a) and (b), size of an object displayed on the display 151 can be gradually reduced due to a touch motion against the touchpad 200. The object displayed, for example, can be an image.

As shown in FIG. 20(c), if a drag distance CD on the touchpad 200 exceeds a threshold value, the controller 180 can display thumbnail images of objects. In other words, size of an object displayed is gradually reduced down to a predetermined scale; however, objects are displayed as thumbnail images below a threshold value.

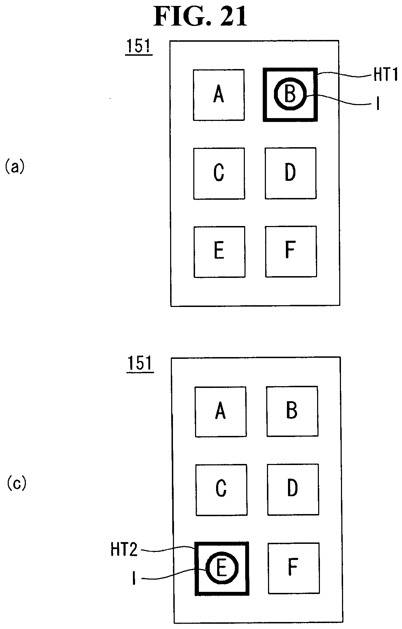

As shown in FIG. 21, the controller 180 of a mobile terminal 100 according to one embodiment of the present invention can carry out operation selecting a particular thumbnail image among thumbnails displayed along a gaze direction.

As shown in FIG. 21(a), the user may be viewing a thumbnail image B; to show the user's gaze direction, an indicator I is displayed on the thumbnail image B. If the user's gaze direction points to the thumbnail image B, the controller 180 displays a highlighted thumbnail image B. For example, a first highlighting line HT1 can be displayed around the thumbnail image B.

As shown in FIG. 21(b), if the gaze direction of the user moves to a thumbnail image E, the controller 180 changes the first highlighting line HT1 around the thumbnail image B to a second highlighting line HT2 around the thumbnail image E.

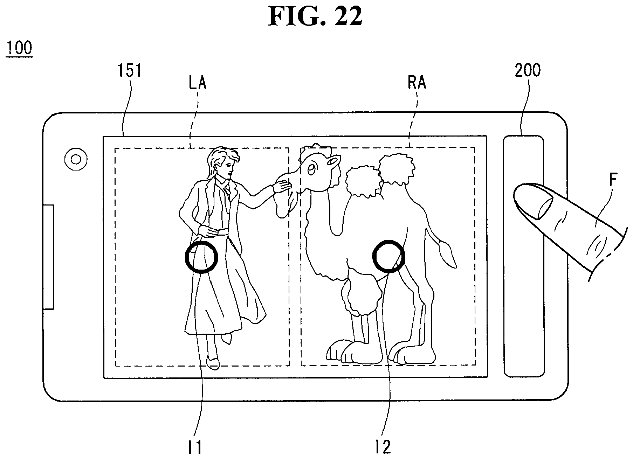

As shown in FIG. 22, the controller 180 of a mobile terminal 100 according to one embodiment of the present invention can display an item before or after an item displayed according to a gaze direction toward the displayed item.

The display 151 can display an image. The image displayed can be one of a plurality of images included in an image gallery.

The controller 180 can divide the display 151 into a first area LA and a second area RA. The first LA and the second area RA may be distinguished logically but not physically.

While the touchpad 200 is being touched by the user's finger F, the user can view a particular area between the first and the second area LA, RA. The controller 180 displays a prior image of a currently displayed image if the user views the first area LA, whereas the controller 180 displays the next image of the currently displayed image if the user views the second area RA. To provide the gaze direction of the user to the user as feedback, the controller 180 can display a first and a second indicator I1, I2 on the display 151.

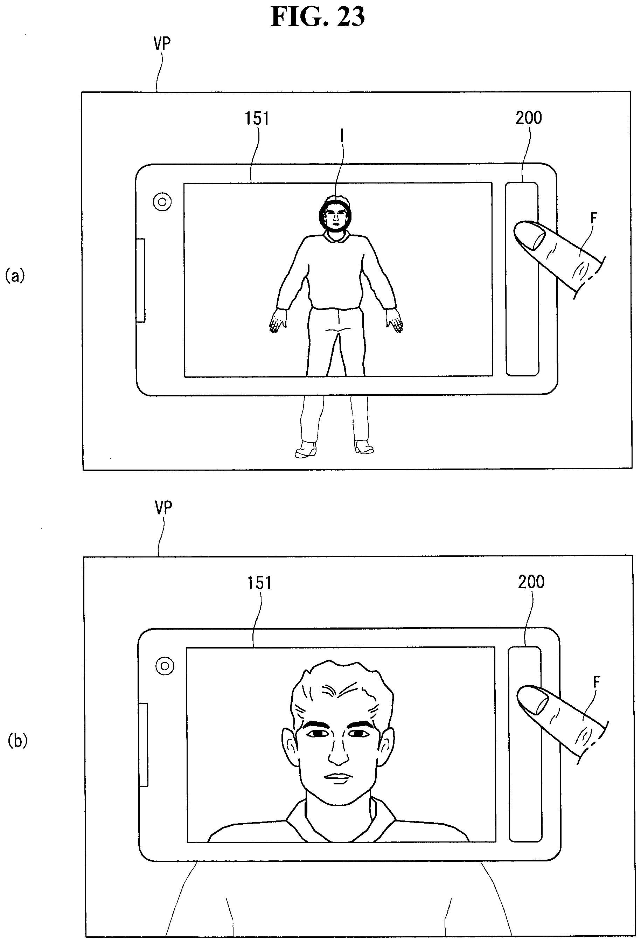

As shown in FIG. 23, the controller 180 of a mobile terminal 100 according to one embodiment of the present invention can magnify the portion corresponding to a viewing position of the user and display the magnified portion.

As shown in FIG. 23(a), part of an image may be displayed on the display 151. In other words, from the entire image VP, only part of the image corresponding to the area supported by the display 151 may be displayed. The user can view a particular part of the displayed image. At this time, the user may be touching the touchpad 200 by his or her finger F.

As shown in FIG. 23(b), if the user views a particular part, the controller 180 magnifies the corresponding part and displays the magnified part.

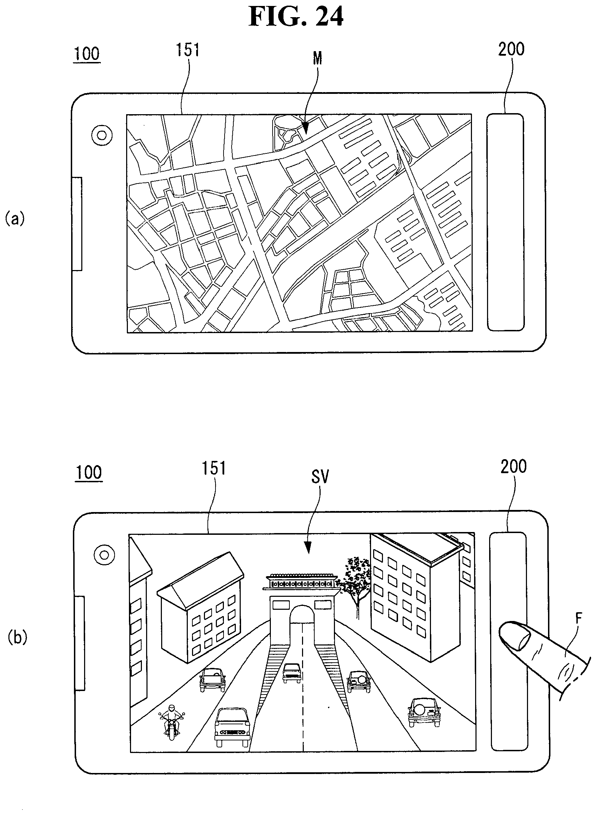

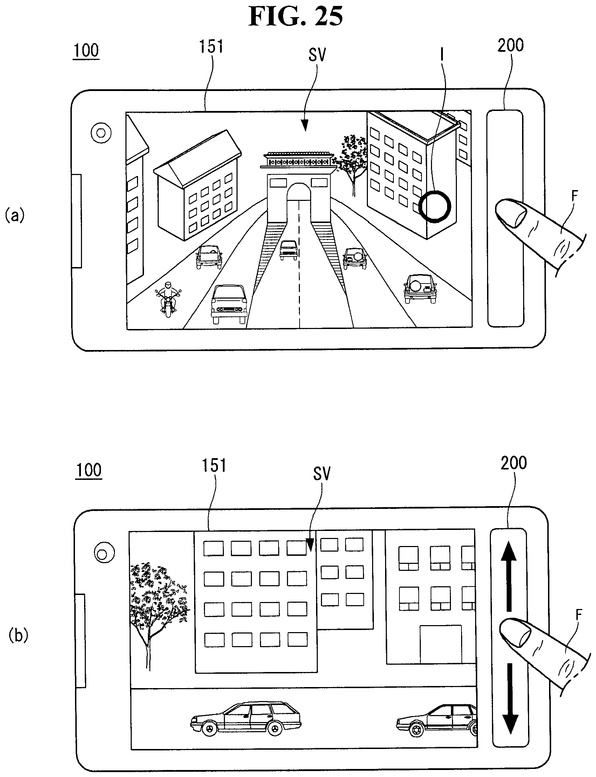

FIGS. 24 and 25 illustrate a fourth embodiment of a mobile terminal of FIG. 1.

As shown in the figures, the controller 180 of a mobile terminal 100 according to a fourth embodiment of the present invention can carry out particular operation if a particular touch motion and/or a particular gaze direction against the touchpad 200 is obtained while a map M is being displayed.

As shown in FIG. 24(a), a map M may be displayed on the display 180.

As shown in FIG. 24(b), while the map M is being displayed, if the touchpad 200 is touched, the controller 180 can display a street view corresponding to the map M. The street view SV may correspond to the representation of displaying images in the same way as someone looks around from a particular location.

As shown in FIG. 25(a), while a street view SV is displayed, the user may view a particular area. For example, the user may view one area for which an indicator I is displayed. At this time, the user may still be touching the touchpad 200.

As shown in FIG. 25(b), a gaze direction of the street view SV may be changed to the area corresponding to a gaze direction of the user. For example, an image displayed toward the front may be changed to face a side surface.

If the user drags the touchpad 200 by using his or her finger F, the controller 180 changes a magnification ratio of the street view SV and displays a scaled view thereof. For example, if the user drags the touchpad along an upper direction, a magnified street view SV is displayed, while a reduced street view SV is displayed if the user drags the touchpad along a lower direction.

FIGS. 26 to 28 illustrate a fifth embodiment of a mobile terminal of FIG. 1.

As shown in the figures, the controller 180 of a mobile terminal 100 according to a fifth embodiment of the present invention can control capture operation of the camera 121 in response to operation against the touchpad 200 and/or the user's gaze direction.

As shown in FIG. 26, the user can capture his or her image through the camera 121 facing the user of the mobile terminal 100. In other words, the image of the user captured through the camera 121 can be displayed on the display 151.

While preparing for image capture, the user may touch the touchpad 200 by using his or her finger F. If the touchpad 200 is touched, the controller 180 can proceed with the image capture depending on the state of the user's eye. For example, if the user blinks his or her eyes, the image capture is carried out. The controller 180 may proceed with image capture when the user's eye recovers to its normal size after a blink of the user's eye. Since additional operation such as pushing a particular button by using the user's finger F is not required for operating the camera 121, image capture can be carried out conveniently. Furthermore, a problem such as focus shaking while additional operation is carried out can be prevented beforehand.

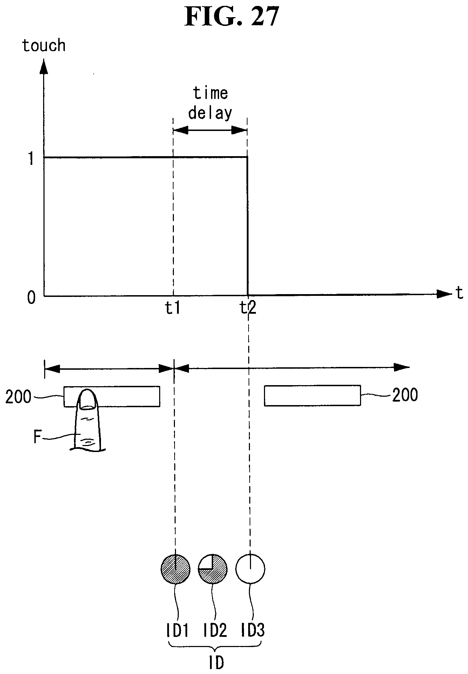

As shown in FIG. 27, the controller 180 of a mobile terminal 100 according to one embodiment of the present invention can maintain the same effect for a predetermined time period as touch operation is in progress even after a touch motion generated by the user's finger F against the touchpad 200 is terminated.

Touch operation against the touchpad 200 may be carried out up to t1; touch operation may be stopped beyond the t1.

The controller 180 determines that touch operation has been stopped at t2, which is a time point after a predetermined time delay since the touch operation is stopped. Therefore, the user can go ahead with image capture in a more natural pose and in a state where the user's finger F is separated from the touchpad 200.

The controller 180 can display a watch icon ID on the display 151 denoting a remaining time period in the time delay for which a touch effect is maintained. The watch icon ID can be changed to a first, second, and third watch icon ID1, ID2, ID3 as time passes. The user, observing the change in a display of the watch icon ID, can recognize the duration for which the effect of touch operation is maintained.

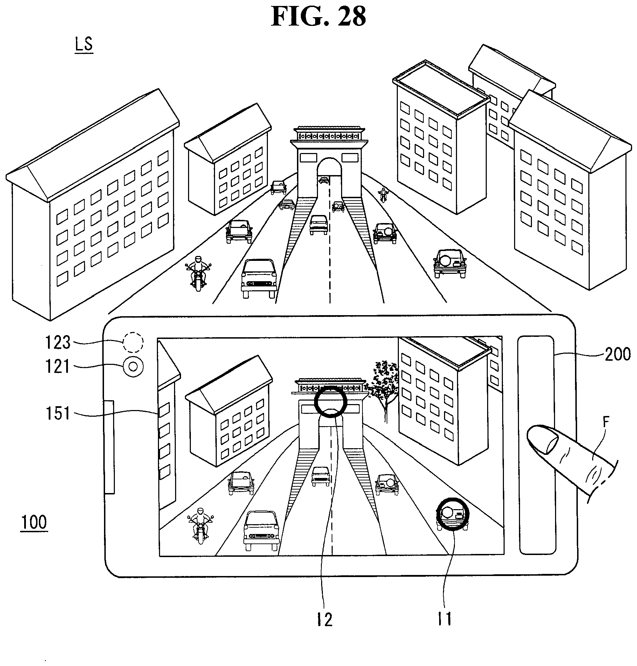

As shown in FIG. 28, the user can take a photograph of a scene LS through a rear camera 123 disposed on the rear surface of the mobile terminal 100. The rear camera 123 may correspond to a camera capable of capturing a three-dimensional image.

During image capture, the user can touch the touchpad 200 by using his or her finger F. While the touchpad 200 is being touched, the user can view a particular area of a captured scene LS. The controller 180 can proceed with image capture having the particular area stay in focus. For example, in case the user views an object relatively close to the user, a first indicator I1 may be displayed to indicate that the camera is focused on the area around the object, whereas a second indicator 12 may be displayed to indicate that the camera is focused on the area around a relatively distant object in case the user view the distant object. Since focus is established based on a gaze direction of the user without additional operation, image capture can be carried out easily.

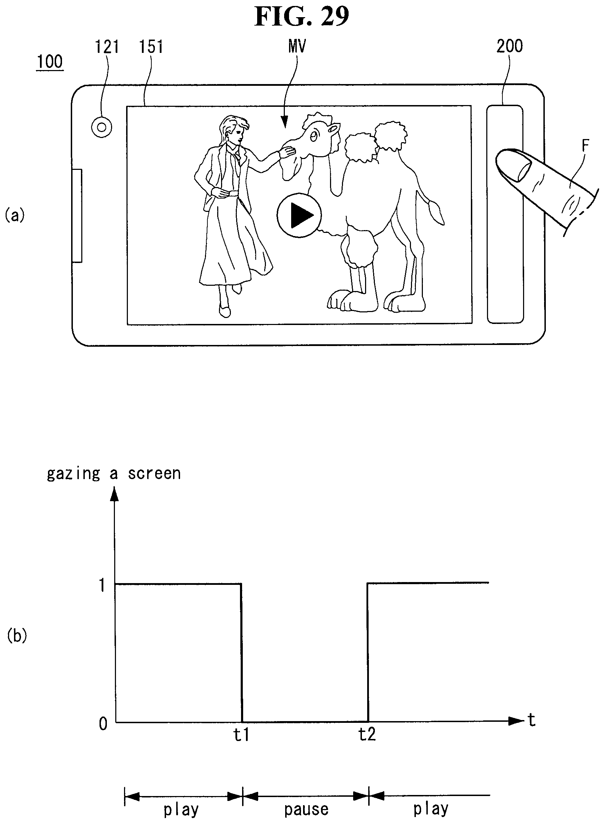

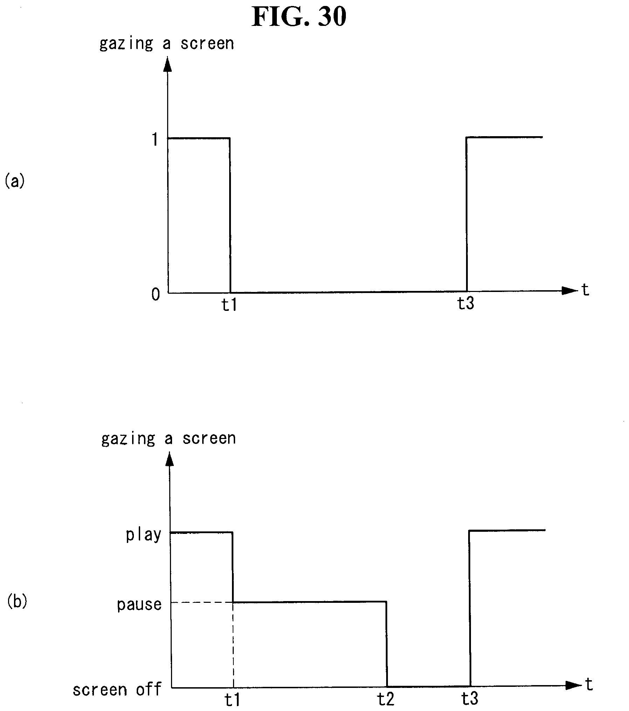

FIGS. 29 and 30 illustrate a sixth embodiment of a mobile terminal of FIG. 1.

As shown in the figures, the controller 180 of a mobile terminal 100 according to a sixth embodiment of the present invention can selectively activate the display 151 according to whether the user views the display 151.

As shown in FIG. 29(a), the display 151 may display an image. For example, the image may correspond to a video MV. The user may be watching the video MV while the user is touching the touchpad 200 with his or her finger F.

As shown in FIG. 29(b), the user may not be watching the display 151 depending on situations. For example, the user may be watching the display 151 up to t1; however, the user may not watch the display 151 between t1 to t2. Also, the user may watch the display 151 again beyond the t2.

The controller 180 can play a video MV only when the user is watching the display 151. In other words, the controller 180 plays a video MV until t1 and after t2, for which the user watches the display 151; the controller 180 stops playing the video MV between t1 to t2. By allowing the video MV to be played selectively when the user is watching the display 151, the user can in fact watch the entire video MV seamlessly.

The controller 180 can enable the display 151 to operate only when the user is watching the display 151. For example, if the user is not viewing the display 151, the controller 180 may turn off back light, thereby minimizing battery consumption.

As shown in FIG. 30, the user may not be viewing the display 151 between t1 to t3.

At the time of t1, the controller 180 may stop playing the video MV. Furthermore, when it becomes t2 after a predetermined time from t1, the controller 180 may turn off the display 151.

If the user views the display 151 again at an arbitrary t3 time, the controller 180 may play the video MV again.

Although the display 151 is turned on again from its turn-off state and the video is played again, the controller 180 can be made not to go through a lock screen. In other words, the mobile terminal 100 can enter normal operating conditions without going through a procedure of entering a password. Therefore, user convenience will be improved for those using the mobile terminal 100 in a continuous manner.

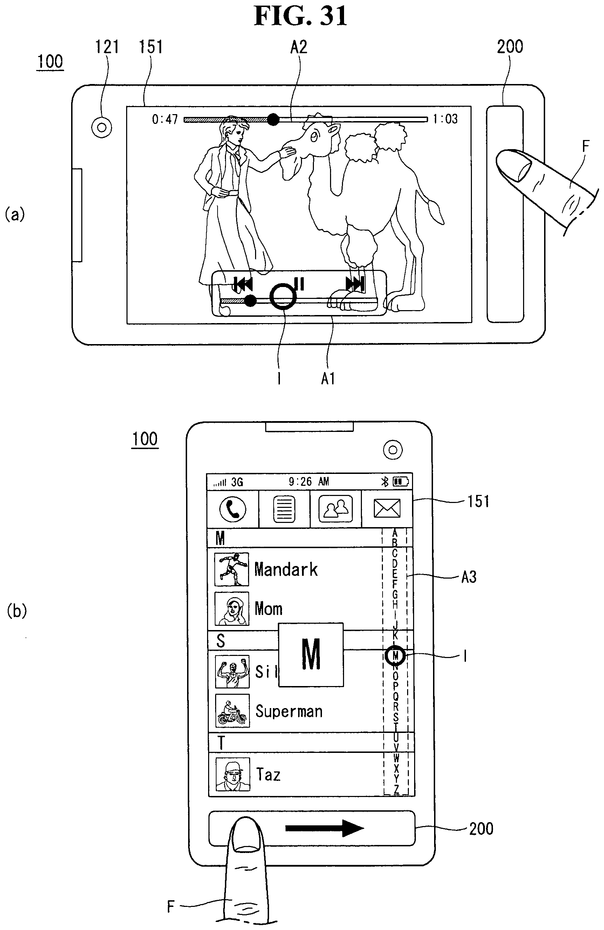

FIG. 31 illustrates a seventh embodiment of a mobile terminal of FIG. 1.

As shown in the figure, the controller 180 of a mobile terminal 100 according to a seventh embodiment of the present invention can carry out a particular function corresponding to a gaze direction of the user while the touchpad 200 is being touched.

As shown in FIG. 31(a), the user can touch the touchpad 200 by using his or her finger F. While the touchpad 200 is being touched, the user can view an area corresponding to a particular function displayed. The area may correspond to a first area A1 in which a volume control bar capable of adjusting a volume is displayed or a second area A2 in which a position control bar capable of controlling a play position is displayed. For example, if the user drags the touchpad 200 while viewing the first area A1, the volume may be adjusted according to a dragging direction.

As shown in FIG. 31(b), the display 151 may display a contact list. The user may touch the touchpad 200 by using his or her finger F. The user may gaze at a quick search area A3 while the touchpad 200 is being touched. The controller 180 may display a particular part of the contact list in response to the particular area watched by the user.

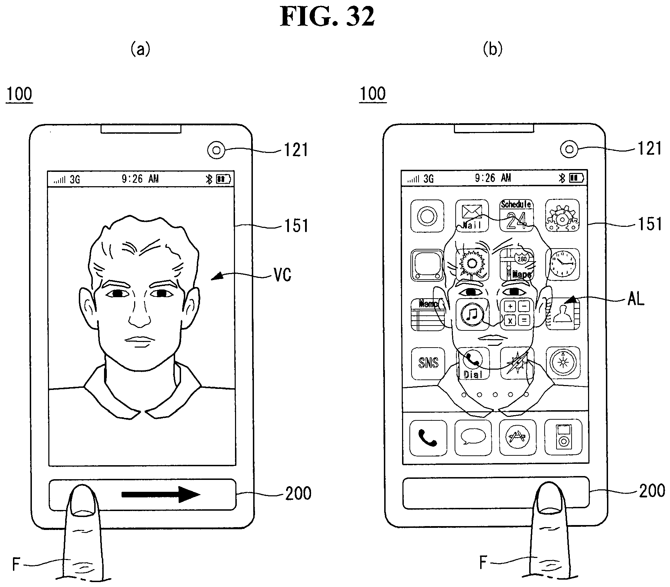

FIG. 32 illustrates an eighth embodiment of a mobile terminal of FIG. 1.

As shown in the figure, the controller 180 of a mobile terminal 100 according to an eighth embodiment of the present invention can share the screen of the mobile terminal 100 while a video conference is in progress.

As shown in FIG. 32(a), the user of the mobile terminal 100, while touching the touchpad 200 by using his or her finger F, may be in progress with a video conference. The display 151 may be displaying the image VC of the other party of the video communication.

As shown in FIG. 32(b), the user can carry out a touch motion dragging his or her finger F on the touchpad 200 in a predetermined direction. According to a dragging distance by the finger F, the controller 180 can make the image VC of the other party and the image AL from the mobile terminal itself 100 overlap with each other. The controller 180, depending on the degree of overlap, can transmit the image AL of the mobile terminal itself 100 to the other party. Therefore, the user can easily exchange necessary data with the other party.

Although not described specifically in the embodiments above, the controller of a mobile terminal according to the present invention can recognize eye shape, iris, and face unique to the user and carry out operation corresponding to the recognition result. For example, when the mobile terminal is in a lock state, the eye shape, iris, and face of the user are captured and the lock state of the mobile terminal can be released when the user of the mobile terminal is authenticated.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.
Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses, whithin the scope of the appended claims, will also be apparent to those skilled in the art.

## Claims

1. A mobile terminal, comprising:
a display (151);
a first camera (121);
a touchpad (200); and
a controller (180), which when a touch input of a user is obtained through the touchpad (200), is configured to carry out an operation based on a gaze direction of the user obtained through the first camera (121),
**characterized in that**
the controller (180) is configured to:
upon receiving the touch input, carry out a centering operation by displaying an object (OB1) of a document (DC) in a center region of the display (151), an initial location of the object (OB1) corresponding to the gaze direction, and
when the touch input is maintained over a predetermined time (t1), carry out a scrolling operation by scrolling continuously the document (DC) displayed on the display (151) along a direction corresponding to the gaze direction.

2. The mobile terminal of claim 1, wherein the touchpad (200) is disposed in a bezel area (105) outside of the display (151).

3. The mobile terminal of claim 2, wherein the touchpad (200) indicates a position of the obtained touch input or further comprises a lighting unit for indicating a position requiring the touch input.

4. The mobile terminal of claim 1, wherein a gaze direction of the user is determined by including the user's facial movements obtained through the first camera (121).

5. The mobile terminal of claim 1, wherein the controller (180) is configured to change a scrolling speed according to a contact area of the obtained touch input.

6. The mobile terminal of claim 1, further comprising a posture detection sensor (141) configured to detect movement of the mobile terminal in three-dimensional space, wherein the controller (180), when the touch input is obtained, is further configured to change a size of an item (OB3) displayed on the display (151) based on the movement obtained and display the size-changed item.

7. The mobile terminal of claim 1, further comprising a second camera configured to capture images along a direction different from the first camera (121) and the controller (180), when the touch input is obtained, is further configured to establish a focus of the second camera based on an item at a position corresponding to the gaze direction from among a plurality of items included in an image captured through the second camera.

8. A control method of a mobile terminal, comprising:
obtaining a touch input of a user through a touchpad (200);
obtaining a gaze direction of the user through a first camera (121); and
carrying out an operation based on at least one of the obtained touch input and the obtained gaze direction,
**characterized by**:
upon obtaining the touch input, carry out a centering operation by displaying an object (OB1) of a document (DC) in a center region of the display (151), an initial location of the object (OB1) corresponding to the gaze direction, and
when the touch input is maintained over a predetermined time (t1), carry out a scrolling operation by scrolling continuously the document (DC) displayed on the display (151) along a direction corresponding to the gaze direction.

## Patentansprüche

1. Ein mobiles Endgerät, umfassend:
eine Anzeige (151);
eine erste Kamera (121);
ein Touchpad (200); und
eine Steuerung (180), die, wenn eine Berührungseingabe eines Benutzers über das Touchpad (200) erhalten wird, dazu eingerichtet ist, einen Vorgang auszuführen, der auf einer Blickrichtung des Benutzers, die durch die erste Kamera (121) erhalten wird, basiert,
**dadurch gekennzeichnet, dass**
die Steuerung (180) dazu eingerichtet ist:
nach Empfangen der Berührungseingabe einen Zentriervorgang durchzuführen, indem ein Objekt (OB1) eines Dokuments (DC) in einem mittleren Bereich der Anzeige (151) angezeigt wird, wobei eine Anfangsstellung des Objekts (OB1) der Blickrichtung entspricht, und
wenn die Berührungseingabe über eine vorbestimmte Zeit (t1) beibehalten wird, einen Verschiebungsvorgang durchzuführen, indem das auf der Anzeige (151) angezeigte Dokument (DC) kontinuierlich entlang einer der Blickrichtung entsprechenden Richtung verschoben wird.

2. Mobiles Endgerät nach Anspruch 1, wobei das Touchpad (200) in einem Frontblendenbereich (105) außerhalb der Anzeige (151) angeordnet ist.

3. Mobiles Endgerät nach Anspruch 2, wobei das Touchpad (200) eine Position der erhaltenen Berührungseingabe anzeigt oder ferner eine Beleuchtungseinheit zur Anzeige einer die Berührungseingabe erfordernden Position umfasst.

4. Mobiles Endgerät nach Anspruch 1, wobei eine Blickrichtung des Benutzers durch Einbeziehung der durch die erste Kamera (121) erhaltenen Gesichtsbewegungen des Benutzers bestimmt wird.

5. Mobiles Endgerät nach Anspruch 1, wobei die Steuerung (180) dazu eingerichtet ist, eine Verschiebegeschwindigkeit gemäß einer Kontaktfläche der erhaltenen Berührungseingabe zu ändern.

6. Mobiles Endgerät nach Anspruch 1, ferner umfassend einen Haltungserkennungssensor (141), der dazu eingerichtet ist, eine Bewegung des mobilen Endgeräts im dreidimensionalen Raum zu erkennen, wobei die Steuerung (180), wenn die Berührungseingabe erhalten wird, ferner dazu eingerichtet ist, eine Größe eines Elements (OB3), das auf der Anzeige (151) angezeigt wird, basierend auf der erhaltenen Bewegung zu ändern und das in der Größe geänderte Element anzuzeigen.

7. Mobiles Endgerät nach Anspruch 1, ferner eine zweite Kamera umfassend, die dazu eingerichtet ist, Bilder entlang einer von der ersten Kamera (121) unterschiedlichen Richtung aufzunehmen, und die Steuerung (180), wenn die Berührungseingabe erhalten wird, ferner dazu eingerichtet ist, einen Fokus der zweiten Kamera basierend auf einem Element an einer Position, die der Blickrichtung entspricht, aus einer Mehrzahl von in einem durch die zweite Kamera aufgenommenen Bild umfassten Elementen zu erstellen.

8. Steuerungsverfahren für ein mobiles Endgerät, umfassend:
Erhalten einer Berührungseingabe eines Benutzers über ein Touchpad (200);
Erhalten einer Blickrichtung des Benutzers über eine erste Kamera (121); und
Ausführen eines Vorgangs basierend auf mindestens einer der erhaltenen Berührungseingaben und der erhaltenen Blickrichtung,
**gekennzeichnet durch**:
Durchführen eines Zentriervorgang nach Erhalten der Berührungseingabe, indem ein Objekt (OB1) eines Dokuments (DC) in einem mittleren Bereich der Anzeige (151) angezeigt wird, wobei eine Anfangsstellung des Objekts (OB1) der Blickrichtung entspricht, und
wenn die Berührungseingabe über eine vorbestimmte Zeit (t1) beibehalten wird, Durchführen eines Verschiebungsvorgangs, indem das auf der Anzeige (151) angezeigte Dokument (DC) kontinuierlich entlang einer der Blickrichtung entsprechenden Richtung verschoben wird.

## Revendications

1. Terminal mobile, comprenant :
un dispositif d'affichage (151) ;
une première caméra (121) ;
un pavé tactile (200) ; et
un dispositif de commande (180), qui, lorsqu'une entrée tactile d'un utilisateur est obtenue par l'intermédiaire du pavé tactile (200), est configuré pour réaliser une opération sur la base d'une direction de regard de l'utilisateur obtenue par l'intermédiaire de la première caméra (121),
**caractérisé par le fait que**
le dispositif de commande (180) est configuré pour :
lors de la réception de l'entrée tactile, réaliser une opération de centrage par affichage d'un objet (OB1) d'un document (DC) dans une région centrale du dispositif d'affichage (151), un emplacement initial de l'objet (OB1) correspondant à la direction de regard, et
lorsque l'entrée tactile est maintenue pendant un temps prédéterminé (t1), réaliser une opération de défilement en faisant défiler de manière continue le document (DC) affiché sur le dispositif d'affichage (151) le long d'une direction correspondant à la direction de regard.

2. Terminal mobile selon la revendication 1, dans lequel le pavé tactile (200) est disposé dans une zone de cadran (105) à l'extérieur du dispositif d'affichage (151).

3. Terminal mobile selon la revendication 2, dans lequel le pavé tactile (200) indique une position de l'entrée tactile obtenue ou comprend en outre une unité d'éclairage pour indiquer une position demandant l'entrée tactile.

4. Terminal mobile selon la revendication 1, dans lequel une direction de regard de l'utilisateur est déterminée en incluant des mouvements faciaux de l'utilisateur obtenus par l'intermédiaire de la première caméra (121).

5. Terminal mobile selon la revendication 1, dans lequel le dispositif de commande (180) est configuré pour changer une vitesse de défilement selon une zone de contact de l'entrée tactile obtenue.

6. Terminal mobile selon la revendication 1, comprenant en outre un capteur de détection de posture (141) configuré pour détecter un déplacement du terminal mobile dans un espace tridimensionnel, le dispositif de commande (180), lorsque l'entrée tactile est obtenue, étant en outre configuré pour changer une taille d'un élément (OB3) affiché sur le dispositif d'affichage (151) sur la base du déplacement obtenu et afficher l'élément dont la taille a été changée.

7. Terminal mobile selon la revendication 1, comprenant en outre une seconde caméra configurée pour capturer des images le long d'une direction différente de la première caméra (121), et le dispositif de commande (180), lorsque l'entrée tactile est obtenue, est en outre configuré pour établir une mise au point de la seconde caméra sur la base d'un élément à une position correspondant à la direction de regard parmi une pluralité d'éléments inclus dans une image capturée par l'intermédiaire de la seconde caméra.

8. Procédé de commande d'un terminal mobile, comprenant :
obtenir une entrée tactile d'un utilisateur par l'intermédiaire d'un pavé tactile (200) ;
obtenir une direction de regard de l'utilisateur par l'intermédiaire d'une première caméra (121) ; et
réaliser une opération sur la base d'au moins l'une parmi l'entrée tactile obtenue et la direction de regard obtenue,
**caractérisé par** :
lors de l'obtention de l'entrée tactile, la réalisation d'une opération de centrage par affichage d'un objet (OB1) d'un document (DC) dans une région centrale du dispositif d'affichage (151), un emplacement initial de l'objet (OB1) correspondant à la direction de regard, et
lorsque l'entrée tactile est maintenue pendant un temps prédéterminé (t1), la réalisation d'une opération de défilement en faisant défiler de manière continue le document (DC) affiché sur le dispositif d'affichage (151) le long d'une direction correspondant à la direction de regard.
